# EUROPÄISCHE PATENTSCHRIFT

(11) **EP 3 104 198 B1**
(45) Veröffentlichungstag und Bekanntmachung des Hinweises auf die Patenterteilung: **12.12.2018**
(21) Anmeldenummer: 16170420.0
(22) Anmeldetag: 19.05.2016
(51) Int. Cl.: G01V 8/14, G02B 7/00, G02B 5/30, G02B 27/28

(54) **OPTOELEKTRONISCHER SENSOR**
OPTOELECTRONIC SENSOR
CAPTEUR OPTOELECTRONIQUE

(30) Priorität: 09.06.2015 DE 102015109088
(43) Veröffentlichungstag der Anmeldung: 14.12.2016
(73) Patentinhaber: SICK AG, 79183 Waldkirch (DE)
(72) Erfinder: Lutz, Jochen, 79261 Gutach (DE)

(56) Entgegenhaltungen:
- EP-A1- 0 005 852
- EP-A2- 2 560 038
- DE-T2- 69 913 889
- US-A1- 2008 180 667
- US-A1- 2009 087 192
- US-A1- 2009 108 185
- US-A1- 2013 242 390
- US-A1- 2014 111 849

## Beschreibung

Die vorliegende Erfindung betrifft einen optoelektronischen Sensor sowie ein Verfahren zur Erfassung von Objekten nach dem Oberbegriff von Anspruch 1 und 7.

Optoelektronische Sensoren werden häufig eingesetzt, um einen Überwachungsbereich auf Eingriffe durch Objekte zu überwachen. Dafür gibt es vielfältige Anwendungen, vom Bewegungsmelder über die Diebstahlsicherung bis zur Absicherung von automatischen Türen. Objekterfassung spielt auch in der Automatisierung eine wichtige Rolle.

Eine Reflexionslichtschranke als Beispiel eines objekterfassenden Sensors besteht, vereinfacht dargestellt, aus einem Lichtsender wie etwa einer LED, dessen Sendestrahl auf einem am gegenüberliegenden Ende des Überwachungsbereichs angebrachten Retroreflektor trifft, dort in sich zurückgeworfen wird und der so reflektierte Empfangsstrahl wiederum von einem in der Nähe des Lichtsenders angeordneten Lichtempfänger empfangen wird und von einer Steuer- und Auswerteeinheit ausgewertet wird. Ist der Lichtstrahl unterbrochen, so empfängt der Lichtempfänger nichts und die Steuer- und Auswerteeinheit löst die Abschaltfunktion aus.

Dabei wird das Licht beim Senden und Empfang durch eine strahlformende Optik geleitet. Es kann sich dabei um eine Lichtschranke nach dem Autokollimationsprinzip handeln, wobei der Pfad bzw. die Sendeachse und die Empfangsachse für das Sendelicht und das Empfangslicht identisch sind bzw. auf einer Achse liegen. Dabei kann die Optik für Sende- und Empfangsstrahl dieselbe sein oder es können unterschiedliche Optiken vorgesehen sein, wobei bei unterschiedlichen Optiken ein Strahlteiler vorgesehen ist. Jedoch kann gemäß dem Doppelaugenprinzip Sender und Empfänger jeweils eine Linse zugeordnet sein, wobei beide Linsen eng benachbart sind und der Pfad für Sendelicht und Empfangslicht getrennt verlaufen.

Um zu unterscheiden, ob das Licht von dem Retroreflektor und nicht von einer unerwünschten Reflexion auf den Lichtempfänger gelangt, wird polarisiertes Licht verwendet. Nach dem Lichtsender bzw. der Lichtsender ist ein erstes Polfilter angeordnet. Vor dem Lichtempfänger ist ein zweites Polfilter angeordnet. Die Polfilter sind in einem Winkel von 90° zueinander gedreht, da das Licht an dem Retroreflektor eine Drehung der Polarisation um 90° bekommt. Nur das von dem Retroreflektor zurückreflektierte Licht, welches das Polfilter des Empfängers durchquert, führt zu einer Auswertung.

Die EP 1 770 413 A1 betrifft eine Reflexionslichtschranke mit Polarisationsfiltern.

Die DE 10 2006 053 229 A1 offenbart einen optoelektronischen Sensor und ein Verfahren zur Erfassung von Objekten mit polarisiertem Licht.

Die Funktion der um 90° zueinander gedrehten Polfilter, bzw. der gekreuzt orientierten Polfilter in Reflexionslichtschranken ist vom Grad der erzielbaren Auslöschung, d. h. von der Ausrichtgenauigkeit, nämlich 90° +/- Fehler Xy im Optikträger abhängig.

Die für Empfangs- und Sendepfad vorgesehenen Polfilter werden in einer Presse paarweise mit einem Stanzpressenhub ausgestanzt. Die Stanzformen liegen eng beieinander, so dass Ausrichtfehler durch Inhomogenitäten im Polfiltermaterial gering gehalten werden. Der Ausrichtfehler wird im Folgenden als Fehler X1 bezeichnet.

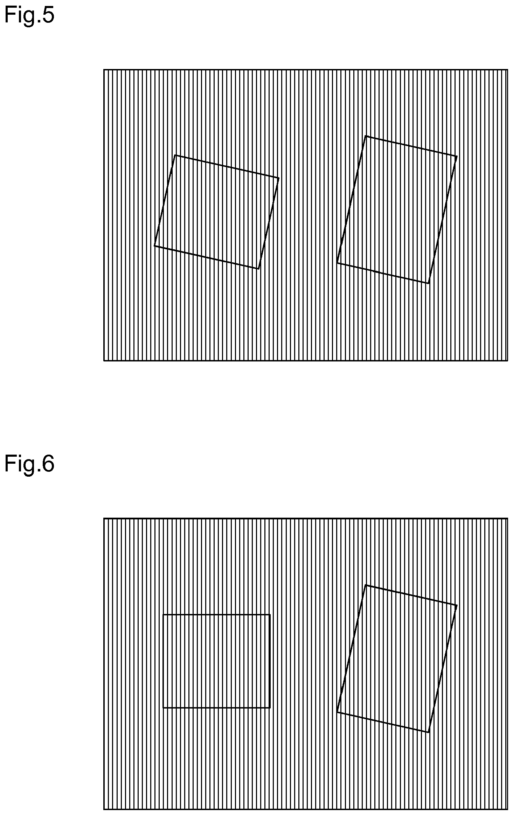

Im Anschluss an den Stanzprozess werden die Polfilter in Optikträgern oder gegebenenfalls im Gehäuse befestigt. Senderseitige Polfilter und der empfängerseitige Polfilter, welche aus demselben Stanzvorgang hervorgehen, werden im selben Gerät verwendet. Damit ist gewährleistet, dass Fehler, im Folgenden Fehler X2 genannt, die durch die Orientierung der Folie zur Pressenaufnahme entstehen, nicht existieren. Der Fehler X2 ist in Figur 5 dargestellt.

Es bleibt weiter ein über eine Serie reproduzierter Fehler X3, welcher durch die Geometrie der Stanzpresse, nämlich der Orientierung der Stanzformen in der Presse zueinander, bzw. der Genauigkeit der Stanzform bedingt ist. Das ist in Figur 6 dargestellt.

Da ein aufwändiges Mitführen von Polfiltern auf Werkstückträgern vermieden werden soll, ist zur Vermeidung von Fehler X1, X2 und X3 erforderlich, dass die Montageschritte zur Befestigung von Sendepolfilter und Empfangspolfilter unmittelbar nacheinander erfolgen müssen.

Bei der Befestigung der Polfilterfolien im Optikträger dient die ausgestanzte Geometrie als Befestigungsreferenz. Oft werden die Filter deshalb gewölbt in Taschen eingeschoben. Hierdurch werden das Auslöschungsvermögen und die Polfilterfunktion weiter eingeschränkt.

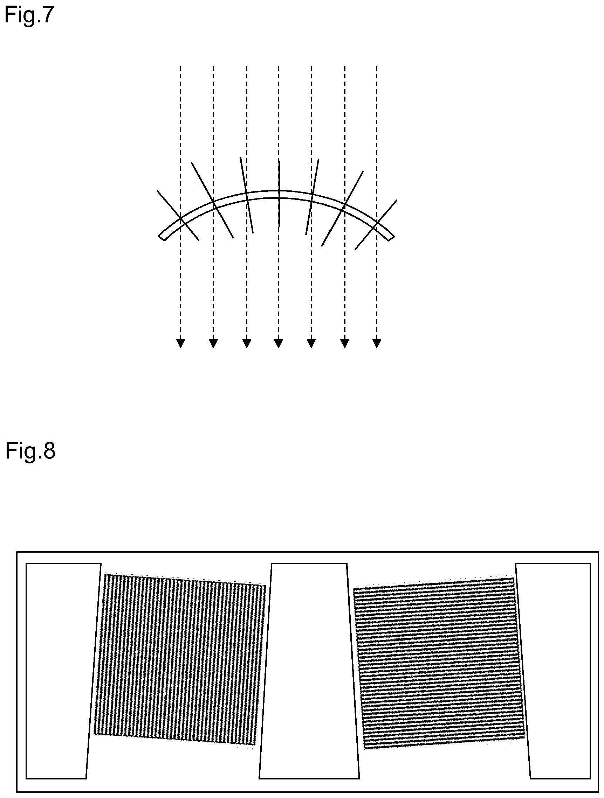

Schließlich werden die Polfilter im Falle eines parallelen Lichtstrahlbündels nicht mehr senkrecht durchleuchtet. Der durch die Wölbung der Polfilter entstehende Fehler wird im Folgenden als Fehler X4 bezeichnet. Das ist in Figur 7 dargestellt.

Der durch die Ungenauigkeit der Polfilterreferenzflächen im Optikträger zustande kommende Ausrichtfehler wird im Folgenden Fehler als X5 bezeichnet. Das ist in Figur 8 dargestellt.

Da in der Regel ein einziger Optikträger verwendet wird, um beide unterschiedlich orientierten Polfilterfolien aufzunehmen, sind insbesondere im Falle von Autokollimationslichtschranken komplexe Spritzgusswerkzeuge mit einer Vielzahl an Schiebern erforderlich.

Wird ein Optikträger in einen getrennten Empfangsoptikträger und einen getrennten Sendeoptikträger aufgespalten, kommt es zum Fehler X6, welcher die Ausrichtgenauigkeit der Polfilterreferenzflächen, bedingt durch die Befestigungsungenauigkeit der einzelnen Optikträgermodule im Gehäuse zueinander beschreibt.

Nachteilig hierbei ist das Auftreten der Fehler X1, X2, X3, X4, X5 und X6 mit entsprechenden Nachteilen für das optische System.

Weiter ergibt sich eine hohe Anforderung an die Komplexität und an die Genauigkeit der Spritzgusswerkzeuge.

Weiter ergibt sich eine eingeschränkte Flexibilität im Montageablauf, da die Polfilter paarweise in demselben Sensor verarbeitet werden müssen.

Die EP 0 005 852 A1 offenbart einen optoelektronischen Sensor mit einem ersten Polarisationsfilter im Sendepfad und einem zweiten Polarisationsfilter im Empfangspfad.

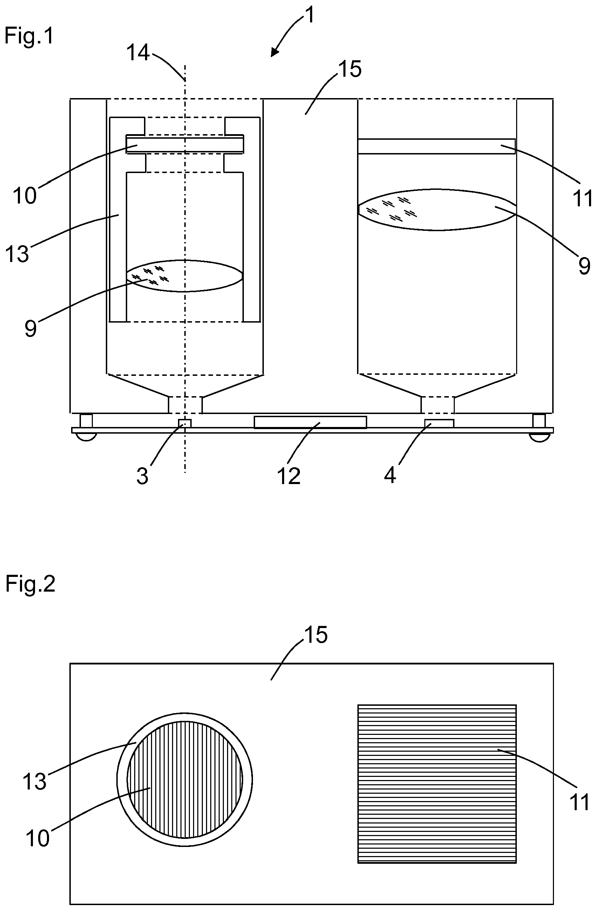

Die US 2014/111 849 A1 offenbart ein Verfahren zum Ausrichten von Polarisationsfiltern. Es wird ein Master-Polarisationsfilter verdreht bis eine Ausrichtung zu einem zweiten Polarisator erreicht ist.
Die US 2013/242390 A1 offenbart eine Antriebseinheit für eine Optik mit einer Polarisationsfiltereinheit, die ein um die optische Achse drehbares Polarisationsfilter aufweist. Die DE 699 13 889 T2 offenbart einen Probenhalter, der auf einem Stangenbausystem beruht, mit welchem optische Komponenten wie Linsen, Filter und Polarisatoren verschoben, hinzugefügt oder entfernt werden können.
Die EP 2 560 038 A2 offenbart einen Optikträger mit einem rohrförmigen Optikhalter, wobei ein optisches Element, beispielsweise ein optisches Filter, fixiert wird.
Die US 2009/108185 A1 offenbart einen optoelektronischen Sensor mit einem ersten Polarisationsfilter 4 im Sendepfad und einem zweiten Polarisationsfilter 10 im Empfangspfad (vgl. Figur 1 und Abschnitt 31), gemäß dem Oberbegriff von unserem Anspruch 1 bzw. Anspruch 5.

Eine Aufgabe der Erfindung besteht darin, einen verbesserten optoelektronischen Sensor bereitzustellen. Weiter soll eine bessere Ausrichtgenauigkeit von Polfiltern für optoelektronische Sensoren bereitgestellt werden, um die Polfilterfunktion zu optimieren und die wirtschaftlichen und produktionstechnischen Vorteile zu erhöhen.

Die Aufgabe wird gemäß Anspruch 1 und/oder Anspruch 5 gelöst.

Gemäß der Erfindung ist es möglich, den Filterträger zu drehen. Ziel dieser Drehjustage ist es, das im Filterträger befindliche Polfilter, hinsichtlich des gewünschten Auslöschungsverhältnisses optimal zu dem anderen im Optikträger befindlichen Polfilter auszurichten. Als Kriterium für das Ausrichten kann beispielsweise das Ausgangssignal des Empfängers dienen.

Nach erfolgter Ausrichtung durch Drehung wird der Filterträger fixiert. Der Filterträger kann beispielsweise durch Laserschweißen, Ultraschallschweißen, Kleben, Schnappen, Verstemmen oder Umspritzen im Optikträger befestigt bzw. fixiert werden.

Der Filterträger zeichnet sich dadurch aus, dass dieser in verschiedenen Größen oder Bauformen hergestellt werden kann. Weiter kann der Filterträger in verschiedenen optoelektronischen Sensorsystemen eingesetzt werden.

Das erste bzw. zweite Polfilter ist beispielsweise durch Laserschweißen, Ultraschallschweißen, Kleben, Schnappen, Verstemmen oder Umspritzen im Filterträger befestigt. Diese Befestigung zeichnet sich dadurch aus, dass keine hohen Genauigkeitsanforderungen an die Referenzflächen zur Polfilterplatzierung bestehen.

Der Filterträger wird in einer Aufnahme am bzw. im Optikträger platziert. In dem Optikträger befindet sich das andere zweite oder erste Polfilter. Auch hier bestehen keine hohen Genauigkeitsanforderungen an die im Optikträger befindlichen Referenzflächen zur Polfilterplatzierung.

Sowohl bei dem Optikträger, als auch bei dem Filterträger handelt es sich um Teile oder Baugruppen, bei denen eine Lagerhaltung oder ein Bezug von verschiedenen externen Lieferanten möglich ist.

Gemäß der Erfindung wird der Fehler X1 reduziert, da das erste/zweite Polfilter zu dem zweiten/ersten Polfilter durch Drehung ausgerichtet wird, und sich ein Ausrichtfehler gegenüber dem Stand der Technik reduzieren lässt.

Der Fehler X2 ist gemäß der Erfindung nicht mehr vorhanden, da eine Orientierung der Polfilterfolie zu der Pressenaufnahme sich nicht mehr auswirkt, da das erste/zweite Polfilter zu dem zweiten/ersten Polfilter durch Drehung ausgerichtet wird.

Auch der Fehler X3, welcher durch die Geometrie der Stanzformen in der Stanzpresse bzw. der Genauigkeit der Stanzform entstehen würde, wirkt sich nicht mehr aus, da das Polfilter ausgerichtet wird.

Der Fehler X4, welcher durch eine Wölbung des Polfilters entstehen würde, ist ebenso wirksam vermieden, da bei dem ausgestanzten Polfilter nicht mehr die ausgestanzte Geometrie als Positionsreferenz dient, sondern das Polfilter ohne Positionsreferenz in dem Filterträger bzw. in dem Optikträger befestigbar ist.

Auch der Fehler X5, welcher durch die Ungenauigkeit der Polfilterreferenzflächen im Filterträger bzw. im Optikträger zustande kommen würde, ist wirksam vermieden, da bei dem ausgestanzten Polfilter nicht mehr die ausgestanzte Geometrie als Positionsreferenz dient, sondern das Polfilter ohne Positionsreferenz in dem Filterträger bzw. in dem Optikträger befestigbar ist.

Weiter ist der Fehler X6 vermieden, da die Polarisationsfilter durch Drehung aufeinander ausgerichtet werden.

Der erfindungsgemäße Sensor ist daher einfacher herzustellen, da die Polfilter in den arbeitsvorbereitenden Schritten einfacher bereitgestellt werden können.

Der Filterträger und der Optikträger können zunächst komplett isoliert voneinander gefertigt werden. Beispielsweise können entsprechende Baugruppen von verschiedenen Zulieferern oder Standorten bezogen werden. Erst bei der finalen Montage des Sensors wird die geometrische Ausrichtung der Polfilter vorgenommen.

Weiter sind Spritzgusswerkzeuge für den Filterträger bzw. den Optikträger weniger komplex und dadurch kostengünstiger. Weiter sind die Anforderungen an die Genauigkeit der Spritzgussteile geringer.

Die einzelnen Montageschritte für den optoelektronischen Sensor können automatisiert werden und müssen nicht manuell durchgeführt werden.

In einer weiteren Ausführung ist an dem Filterträger die Linse angeordnet. Dadurch ist die Linse gegenüber dem Polfilter fest fixiert. Weiter kann die Linse durch den Filterträger positioniert bzw. justiert werden. So kann die genaue Position der Linse bei der Montage des optoelektronischen Sensors festgelegt werden.

Gemäß der Erfindung ist der Filterträger in dem Optikträger entlang der optischen Längsachse verschiebbar. Dadurch kann beispielsweise die Linse gegenüber dem Lichtsender bzw. gegenüber dem Lichtempfänger verschoben werden. Dadurch kann ein genau gewünschter Abstand zwischen Linse und Lichtsender bzw. Lichtempfänger eingestellt werden.

Der Filterträger kann beispielsweise mit einem Greifer entlang der optischen Längsachse bewegt werden, sodass der Abstand zwischen Linse und Lichtsender bzw. Linse und Lichtempfänger genau justiert werden kann.

In Weiterbildung der Erfindung ist an dem Filterträger eine Blende angeordnet. Durch die Blende kann bei dem Lichtsender der Strahldurchmesser des Sendepfades eingestellt werden. Bei dem Lichtempfänger kann durch die Blende die Tiefenschärfe und die Lichtmenge eingestellt werden. Durch die Anordnung der Blende an dem Filterträger kann die Position der Blende zum Lichtsender bzw. zum Lichtempfänger eingestellt werden.

In Weiterbildung der Erfindung ist der Filterträger rohrförmig ausgebildet. Im Innern des rohrförmigen Filterträgers sind dann die Komponenten wie Polfilter, Linse und/oder Blende befestigt. Durch die rohrförmige Ausbildung können die meist kreisförmigen Komponenten wie Polfilter, Linse und/oder Blende leicht befestigt werden. Weiter kann durch die rohrförmige Form der Filterträger einfach in dem Optikträger drehbar gelagert werden. Der Filterträger kann jedoch auch kreiszylindrisch ausgeführt sein.

In Weiterbildung der Erfindung stehen die optischen Achsen von Lichtsender und Lichtempfänger senkrecht zueinander und ein Strahlteiler ist im Winkel von 45° gegenüber beiden optischen Achsen im Schnittpunkt beider optischer Achsen angeordnet. Durch den Stahlteiler wird ein koaxiales System gebildet.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen optoelektronischen Sensor mit Filterträger und Optikträger;
- Figur 2: einen Filterträger in dem Optikträger;
- Figur 3: einen erfindungsgemäßen Sensor nach dem Doppelaugenprinzip;
- Figur 4: einen erfindungsgemäßen Sensor mit einem Strahlteiler;
- Figur 5 bis 8: jeweils einen Fehler nach dem Stand der Technik.

In den nachfolgenden Figuren sind identische Teile mit identischen Bezugszeichen versehen.

Figur 1 zeigt einen optoelektronischen Sensor 1 zur Erfassung von Objekten mit mindestens einem Lichtsender 3 und mindestens einem Lichtempfänger 4, die derart zueinander angeordnet sind, dass Licht des Lichtsenders 3 auf einen Sendepfad zu einem Retroreflektor und auf einem Empfangspfad zurück zu dem Lichtempfänger 4 geführt wird, wobei Lichtsender 3 und Lichtempfänger 4 zur Fokussierung des Lichts nach dem Autokollimationsprinzip auf einen Lichtstrahl eine gemeinsame Optik 9 oder getrennte Optiken 9 aufweisen oder je eine zueinander dicht benachbarte Linse 9 nach dem Doppelaugenprinzip zugeordnet ist, wobei der Sensor 1 dafür ausgebildet ist, das Licht des Lichtsenders über ein erstes Polfilter 10 dem Sendepfad und das reflektierte Licht aus dem Empfangspfad über ein zweites Polfilter 11 dem Lichtempfänger 4 zuzuführen und wobei eine Steuer- und Auswerteeinheit 12 dazu ausgebildet ist, eine Unterbrechung des Lichtstrahls als Erfassung eines Objekts zu erkennen, wobei das erste Polfilter 10 oder das zweite Polfilter 11 an einem Filterträger 13 wenigstes drehbar um eine optische Längsachse 14 in einem Optikträger 15 gelagert ist, und das andere zweite Polfilter 11 oder erste Polfilter 10 ortsfest fixiert ist und das erste Polfilter 10 oder das zweite Polfilter in einem Winkel von 90° zu dem anderen zweiten Polfilter 11 oder ersten Polfilter 10 fixierbar ist.

Gemäß der Erfindung ist es möglich, den Filterträger 13 zu drehen. Ziel dieser Drehjustage ist es, das im Filterträger 13 befindliche Polfilter 10, hinsichtlich des gewünschten Auslöschungsverhältnisses optimal zu dem anderen im Optikträger 15 befindlichen Polfilter 11 auszurichten. Als Kriterium für das Ausrichten kann beispielsweise das Ausgangssignal des Lichtempfängers 4 dienen.

Nach erfolgter Ausrichtung durch Drehung wird der Filterträger 13 fixiert. Der Filterträger 13 kann beispielsweise durch Laserschweißen, Ultraschallschweißen, Kleben, Schnappen, Verstemmen oder Umspritzen im Optikträger befestigt werden.

Das erste Polfilter 10 bzw. das zweite Polfilter 11 ist beispielsweise durch Laserschweißen, Ultraschallschweißen, Kleben, Schnappen, Verstemmen oder Umspritzen im Filterträger 13 befestigt.

Der Filterträger 13 wird in einer Aufnahme am bzw. im Optikträger 15 platziert. In dem Optikträger 15 befindet sich das andere zweite Polfilter 11 oder erste Polfilter 10.

Der Filterträger 13 und der Optikträger 15 können zunächst komplett isoliert voneinander gefertigt werden. Erst bei der finalen Montage des Sensors 1 wird die geometrische Ausrichtung der Polfilter 10 und 11 vorgenommen.

Gemäß Figur 1 ist an dem Filterträger die Optik 9 bzw. Linse angeordnet. Dadurch ist die Optik 9 bzw. Linse gegenüber dem Polfilter 10 fest fixiert. Weiter kann die Linse durch den Filterträger 13 positioniert bzw. justiert werden. So kann die genaue Position der Optik 9 bzw. Linse bei der Montage des optoelektronischen Sensors 1 festgelegt werden.

Gemäß Figur 1 ist der Filterträger 13 in dem Optikträger 15 entlang der optischen Längsachse 14 verschiebbar. Dadurch kann beispielsweise die Optik 9 bzw. Linse gegenüber dem Lichtsender 3 bzw. gegenüber dem Lichtempfänger 4 verschoben werden. Dadurch kann ein genau gewünschter Abstand zwischen Optik 9 bzw. Linse und Lichtsender 3 bzw. Lichtempfänger 4 eingestellt werden.

Der Filterträger 13 kann beispielsweise mit einem Greifer entlang der optischen Längsachse 14 bewegt werden, sodass der Abstand zwischen Optik 9 bzw. Linse und Lichtsender 3 bzw. Linse und Lichtempfänger 4 genau justiert werden kann.

Weiter kann an dem Filterträger 13 eine Blende angeordnet sein. Durch die Blende kann bei dem Lichtsender 3 der Strahldurchmesser des Sendepfades eingestellt werden. Bei dem Lichtempfänger 4 kann durch die Blende die Tiefenschärfe und die Lichtmenge eingestellt werden. Durch die Anordnung der Blende an dem Filterträger 13 kann die Position der Blende zum Lichtsender 3 bzw. zum Lichtempfänger 4 eingestellt werden.

Gemäß Figur 1 ist der Filterträger 13 rohrförmig ausgebildet. Im Innern des rohrförmigen Filterträgers 13 sind dann die Komponenten wie Polfilter 10 bzw. 11, Optik 9 bzw. Linse und/oder Blende befestigt. Durch die rohrförmige Form des Filterträgers 13 kann dieser einfach in dem Optikträger 15 drehbar gelagert werden.

Figur 2 zeigt den Filterträger 13 in dem Optikträger 15 mit dem Polfilter 10 und dem Polfilter 11, wobei die Polfilter im Winkel von 90° zueinander ausgerichtet sind.

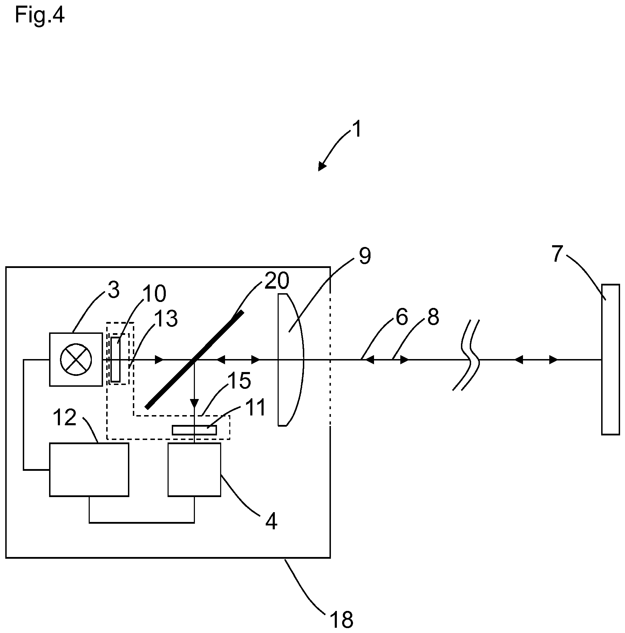

Gemäß Figur 4 stehen die optischen Achsen von Lichtsender 3 und Lichtempfänger 4 senkrecht zueinander und ein Strahlteiler 20 ist im Winkel von 45° gegenüber beiden optischen Achsen im Schnittpunkt beider optischer Achsen angeordnet. Durch den Stahlteiler 20 wird ein koaxiales System gebildet.

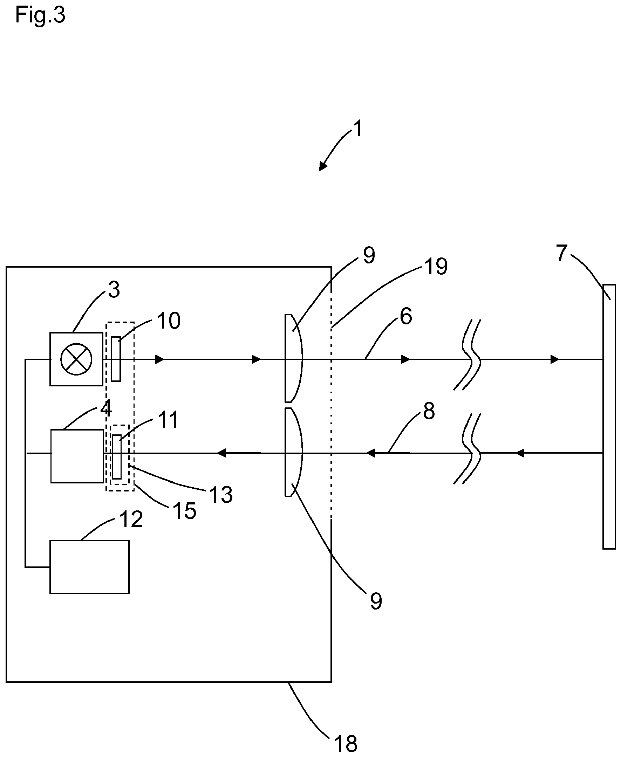

Anhand der Figur 3 wird der Aufbau eines erfindungsgemäßen Sensors 1 erläutert. Der Sensor 1 ist bevorzugt eine Reflexionslichtschranke, die allein oder als Teil eines Lichtgitters eingesetzt wird.

In einem Gehäuse 18 ist ein Lichtsender 3 vorgesehen, der eine LED oder ein Laser beliebiger Wellenlänge unter anderem im Infrarot-, sichtbaren oder Ultraviolettbereich sein kann. Die Lichtquelle sendet Licht durch einen Polarisator.

Das Licht wird transmittiert und gelangt über eine strahlformende Optik 9 und ein Sichtfenster 19 des Gehäuses 18 in den eigentlichen Sendepfad 6.

Das Sendelicht trifft auf den Retroreflektor 7 und wird dort mit dreimaliger Totalreflexion in sich zurückgeworfen. Es kehrt also als Empfangsstrahl auf einem mit dem Sendepfad 6 im Wesentlichen übereinstimmenden - also abgesehen von minimaler Versetzung in der Größenordnung der Mikroreflektoren des Retroreflektors 7 und unvermeidbaren optischen Abbildungsfehlern - Empfangspfad 8 zurück, tritt erneut durch das Sichtfenster 19 in das Gehäuse 18 ein und trifft nach Strahlformung in der strahlformenden Optik 9 bzw. Linse auf den Lichtempfänger 4.

Die strahlformende Optik 9 kann eine einfache Sammellinse oder jegliches sonst aus der Optik bekannte Element sein. Es kann eine Doppellinse gemäß dem Doppelaugenprinzip mit je einer Linse für den Sendepfad 6 und den Empfangspfad 8 vorgesehen sein. Die strahlformende Optik 9 kann im Sichtfenster 19 sitzen oder das Sichtfenster 19 bilden.

Das Empfangslicht wird durch ein zweites Polfilter 11 mit einer zu dem ersten Polfilter 10 senkrechten Polarisationsrichtung auf einen Lichtempfänger 11 reflektiert und dort beispielsweise mittels einer Photodiode oder eines CCD- bzw. CMOS-Chips in ein elektrisches Signal umgesetzt.

Eine Steuer- und Auswerteeinheit 12 empfängt dieses elektrische Signal. Die Steuer- und Auswerteeinheit 12 erkennt somit, ob das Licht des Lichtsenders 3 ungehindert empfangen wird. Wird kein elektrisches Signal entsprechend einem empfangenen Empfangsstrahl ausgegeben, so erkennt die Steuer- und Auswerteeinheit 12 eine Unterbrechung und damit ein Objekt im Strahlengang. Darauf reagiert die Steuer- und Auswerteeinheit 12, indem sie ein Signal für die Anwesenheit eines Objekts ausgibt.

Das kann für einen nachgelagerten Verarbeitungsprozess in der Automatisierungstechnik verwendet werden oder alternativ ein Warnsignal oder ein Abschaltsignal für eine zugeordnete Maschine sein. Die Steuer- und Auswerteeinheit 12 kann auch mit der Lichtquelle 3 verbunden sein, etwa um diese ein- und auszuschalten.

Anhand der Figur 4 wird der Aufbau eines weiteren nicht erfindungsgemäßen optoelektronischen Sensors 1 erläutert. Der Sensor 1 ist bevorzugt eine Reflexionslichtschranke, die allein oder als Teil eines Lichtgitters eingesetzt wird.
In einem Gehäuse 18 ist ein Lichtsender 3 vorgesehen, der eine LED oder ein Laser beliebiger Wellenlänge unter anderem im Infrarot-, sichtbaren oder Ultraviolettbereich sein kann. Der Lichtsender sendet Licht durch ein Polfilter 10 zu einem Strahlteiler 20. Der Strahlteiler 20 steht in einem Winkel von 45° zu dem Lichtsender 3 und besteht aus einem Dielektrikum bzw. einer Glasplatte.

An dem Strahlteiler 20 wird ein Teil des Lichtes reflektiert und muss dann zur Vermeidung von optischem Übersprechen im Gehäuse 18 oder auf eine andere nicht dargestellte Weise absorbiert werden. Der übrige Teil des Lichtes wird transmittiert und gelangt über eine strahlformende Optik 9 und ein Sichtfenster 19 des Gehäuses 18 in den eigentlichen Sendepfad 6.
Das Sendelicht trifft auf den Retroreflektor 7 und wird dort mit dreimaliger Totalreflexion in sich zurückgeworfen. Es kehrt also als Empfangsstrahl mit nur geringfügigen Abweichungen auf einen mit dem Sendepfad 6 im Wesentlichen übereinstimmenden - also abgesehen von minimaler Versetzung in der Größenordnung der Mikroreflektoren des Retroreflektors 7 und unvermeidbaren optischen Abbildungsfehlern - Empfangspfad 8 zurück, tritt erneut durch das Sichtfenster 19 in das Gehäuse 18 ein und trifft nach Strahlformung in der strahlformenden Optik 9 auf den Strahlteiler 20.
Die strahlformende Optik 9 kann eine einfache Sammellinse oder jegliches sonst aus der Optik bekannte Element sein. Die strahlformende Optik 9 kann im Sichtfenster 19 sitzen oder das Sichtfenster 19 bilden.
Am Strahlteiler 20 wird ein Teil des Empfangslichts transmittiert und fällt auf den Lichtsender 3, geht also für eine Auswertung verloren. Der übrige Teil des Empfangslichts wird durch ein Polfilter 11 mit einer zu dem Polfilter 10 senkrechten Polarisationsrichtung auf einen Lichtempfänger 4 reflektiert und dort beispielsweise mittels einer Photodiode oder eines CCD- bzw. CMOS-Chips in ein elektrisches Signal umgesetzt.

Eine Steuer- und Auswerteeinheit 12 empfängt dieses elektrische Signal wie gemäß Figur 3 erläutert.

### Bezugszeichen:

1 Optoelektronischer Sensor
3 Lichtsender
4 Lichtempfänger
6 Sendepfad
7 Retroreflektor
8 Empfangspfad
9 Optik
10 erstes Polfilter
11 zweites Polfilter
12 Steuer- und Auswerteeinheit
13 Filterträger
14 optische Längsachse
15 Optikträger
16 Blende
18 Gehäuse
19 Sichtfenster
20 Strahlteiler

## Patentansprüche

1. Optoelektronischer Sensor zur Erfassung von Objekten (2) mit mindestens einem Lichtsender (3) und mindestens einem Lichtempfänger (4), die derart zueinander angeordnet sind, dass Licht der Lichtsender (3) auf einen Sendepfad (6) zu einem Retroreflektor (7) und auf einem Empfangspfad (8) zurück zu dem Lichtempfänger (4) geführt wird, wobei Lichtsender (3) und Lichtempfänger (4) zur Fokussierung des Lichts auf einen Lichtstrahl nach dem Autokollimationsprinzip getrennte Optiken (9) aufweisen oder je eine zueinander dicht benachbarte Optik (9) nach dem Doppelaugenprinzip zugeordnet ist, wobei der optoelektronische Sensor (1) dafür ausgebildet ist, das Licht der Lichtsender (3) über ein erstes Polfilter (10) dem Sendepfad (6) und das reflektierte Licht aus dem Empfangspfad (8) über ein zweites Polfilter (11) dem Lichtempfänger (4) zuzuführen und wobei eine Steuer- und Auswerteeinheit (12) dazu ausgebildet ist, eine Unterbrechung des Lichtstrahls als Erfassung eines Objekts (2) zu erkennen,
**dadurch gekennzeichnet, dass**
das erste Polfilter (10) oder das zweite Polfilter (11) an einem Filterträger (13) wenigstes drehbar um eine optische Längsachse in einem Optikträger (15) gelagert ist, und das andere zweite Polfilter (11) oder erste Polfilter (10) ortsfest fixiert ist und das erste Polfilter (10) oder das zweite Polfilter in einem Winkel von 90° zu dem anderen zweiten Polfilter (11) oder ersten Polfilter (10) fixierbar ist, wobei an dem Filterträger (13) eine der Optiken (9) angeordnet ist und der Filterträger (13) in dem Optikträger (15) entlang der optischen Längsachse verschiebbar ist.

2. Optoelektronischer Sensor nach Anspruch 1, **dadurch gekennzeichnet, dass** an dem Filterträger (13) eine Blende (16) angeordnet ist.

3. Optoelektronischer Sensor nach einem der vorhergehenden Ansprüche, **dadurch gekennzeichnet, dass** der Filterträger (13) rohrförmig ausgebildet ist.

4. Optoelektronischer Sensor nach einem der vorhergehenden Ansprüche,
**dadurch gekennzeichnet, dass** die optischen Achsen von Lichtsender (3) und Lichtempfänger (4) senkrecht zueinander stehen und ein Strahlteiler (17) im Winkel von 45° gegenüber beiden optischen Achsen im Schnittpunkt beider optischer Achsen angeordnet ist.

5. Verfahren zur Erfassung von Objekten mittels eines optoelektronischen Sensors (1) mittels Lichts eines Lichtsenders (3), das nach dem Autokollimationsprinzip oder nach dem Doppelaugenprinzip als Lichtstrahl auf einem Sendepfad (6) zu einem Retroreflektor (7) und auf einem Empfangspfad (8) zurück zu einem Lichtempfänger (4) geführt wird, wobei Lichtsender (3) und Lichtempfänger (4) zur Fokussierung des Lichts auf einen Lichstrahl nach dem Autokollimationsprinzip getrennte Optiken aufweisen oder je eine zueinander dicht benachbarte Optik (9) nach dem Doppelaugenprinzip zugeordnet ist, wobei das Licht der Lichtsender (3) polarisiert dem Sendepfad (6) und das reflektierte Licht aus dem Empfangspfad (8) polarisiert dem Lichtempfänger (4) zugeführt wird, und wobei eine Unterbrechung des Lichtstrahls als Erfassung eines Objekts (2) erkannt wird,
**dadurch gekennzeichnet, dass**
das erste Polfilter (10) oder das zweite Polfilter (11) an einem Filterträger (13) um eine optische Längsachse in einem Optikträger (15) gedreht wird, und das andere zweite Polfilter (11) oder erste Polfilter (10) ortsfest fixiert wird und das erste Polfilter (10) oder das zweite Polfilter in einem Winkel von 90° zu dem anderen zweiten Polfilter (11) oder ersten Polfilter (10) fixiert wird, an dem Filterträger (13) eine der Optiken (9) angeordnet wird und der Filterträger (13) in dem Optikträger (15) entlang der optischen Längsachse (14) verschoben wird.

6. Verfahren zur Erfassung von Objekten Anspruch 5, **dadurch gekennzeichnet, dass** an dem Filterträger (13) eine Blende (16) angeordnet wird.

7. Verfahren zur Erfassung von Objekten nach einem der vorhergehenden Ansprüche 5 bis 6, **dadurch gekennzeichnet, dass** der Filterträger (13) rohrförmig ausgebildet wird.

## Claims

1. An optoelectronic sensor for detecting objects (2) having at least one light transmitter (3) and having at least one light receiver (4) that are arranged with respect to one another such that light of the light transmitters (3) is conducted to a retroreflector (7) on a transmission path (6) and is conducted back to the light receiver (4) on a reception path (8), wherein the light transmitter (3) and the light receiver (4) have separate optics (9) for focusing the light onto a light beam in accordance with the autocollimation principle or each have an optics (9), the optics (9) being directly adjacent to one another and being associated in accordance with the two-eye principle; wherein the optoelectronic sensor (1) is configured to supply the light of the light transmitters (3) to the transmission path (6) via a first polarizing filter (10) and to supply the reflected light from the reception path (8) to the light receiver (4) via a second polarizing filter (11); and wherein a control and evaluation unit (12) is configured to recognize an interruption of the light beam as a detection of an object (2),
**characterized in that**
the first polarizing filter (10) or the second polarizing filter (11) is supported at a filter carrier (13) at least rotatable about one longitudinal optical axis in an optics carrier (15); and **in that** the other second polarizing filter (11) or first polarizing filter (10) is fixed in a stationary position and the first polarizing filter (10) or the second polarizing filter is fixable at an angle of 90° to the other second polarizing filter (11) or first polarizing filter (10), with an optics (9) being arranged at the filter carrier (13) and with the filter carrier (13) being displaceable along the longitudinal optical axis in the optical carrier (15).

2. An optoelectronic sensor in accordance with claim 1,
**characterized in that** a diaphragm (16) is arranged at the filter carrier (13).

3. An optoelectronic sensor in accordance with one of the preceding claims,
**characterized in that** the filter carrier (13) is tubular.

4. An optoelectronic sensor in accordance with any one of the preceding claims,
**characterized in that** the optical axes of the light transmitter (3) and of the light receiver (4) are perpendicular to one another and the beam splitter (17) is arranged at an angle of 45° with respect to both optical axes at the point of intersection of both optical axes.

5. A method of detecting objects by means of an optoelectronic sensor (1) by means of light of a light transmitter (3) that is conducted as a light beam to a retroreflector (7) on a transmission path (6) and back to the light receiver (4) on a reception path (8) in accordance with the autocollimation principle or in accordance with the two-eye principle, wherein the light transmitter (3) and the light receiver (4) have separate optics for focusing the light onto a light beam in accordance with the autocollimation principle or each have an optics (9), the optics (9) being directly adjacent to one another and being associated in accordance with the two-eye principle; and
wherein the light of the light transmitters (3) is supplied in polarized form to the transmission path (6) and the reflected light from the reception path (8) is supplied in polarized form to the light receiver (4), and wherein an interruption of the light beam is recognized as a detection of an object (2),
**characterized in that**
the first polarizing filter (10) or the second polarizing filter (11) is rotated at a filter carrier (13) about a longitudinal optical axis in an optics carrier (15); and the other second polarizing filter (11) or first polarizing filter (10) is fixed in a stationary position and the first polarizing filter (10) or the second polarizing filter is fixed at an angle of 90° to the other second polarizing filter (11) or first polarizing filter (10); **in that** one of the optics (9) is arranged at the filter carrier (9); and **in that** the filter carrier (13) is displaced along the longitudinal optical axis (14) in the optical carrier (15).

6. A method of detecting objects in accordance with claim 5,
**characterized in that** a diaphragm (16) is arranged at the filter carrier (13).

7. A method of detecting objects in accordance with one of the preceding claims 5 to 6,
**characterized in that** the filter carrier (13) is tubular.

## Revendications

1. Capteur optoélectronique pour détecter des objets (2), comportant au moins un émetteur de lumière (3) et au moins un récepteur de lumière (4) qui sont agencés de telle sorte l'un par rapport à l'autre que la lumière des émetteurs de lumière (3) est amenée sur un trajet d'émission (6) vers un rétro-réflecteur (7) et sur un trajet de réception (8) en retour vers le récepteur de lumière (4), dans lequel l'émetteur de lumière (3) et le récepteur de lumière (4) comprennent pour focaliser la lumière sur un faisceau lumineux des optiques séparées (9) selon le principe d'auto-collimation, ou bien une optique respective (9) étroitement voisine est associée selon le principe double-oeil, le capteur optoélectronique (1) est réalisé pour amener la lumière des émetteurs de lumière (3) vers le trajet d'émission (6) via un premier filtre polarisant (10) et pour amener la lumière réfléchie depuis le trajet de réception (8) vers le récepteur de lumière (4) via un second filtre polarisant (11), et une unité de commande et d'évaluation (12) est réalisée pour reconnaître une interruption du faisceau lumineux en tant que détection d'un objet (2),
**caractérisé en ce que**
le premier filtre polarisant (10) ou le second filtre polarisant (11) est monté au moins mobile en rotation autour d'un axe longitudinal optique sur un porte-filtre (13) dans un porte-optique (15), et l'autre second filtre polarisant (11) ou le premier filtre polarisant (10) est fixé de façon stationnaire, et le premier filtre polarisant (10) ou le second filtre polarisant est susceptible d'être fixé sous un angle de 90° par rapport à l'autre second filtre polarisant (11) ou par rapport au premier filtre polarisant (10), l'une des optiques (9) étant agencée sur le porte-filtre (13) et le porte-filtre (13) étant mobile en translation le long de l'axe longitudinal optique dans le porte-optique (15).

2. Capteur optoélectronique selon la revendication 1,
**caractérisé en ce que** un diaphragme (16) est agencé sur le porte-filtre (13).

3. Capteur optoélectronique selon l'une des revendications précédentes,
**caractérisé en ce que** le porte-filtre (13) est réalisé en forme tubulaire.

4. Capteur optoélectronique selon l'une des revendications précédentes,
**caractérisé en ce que** es axes optiques de l'émetteur de lumière (3) et du récepteur de lumière (4) sont perpendiculaires l'un à l'autre, et un diviseur de faisceau (17) est agencé sous un angle de 45° par rapport aux deux axes optiques, au point d'intersection des deux axes optiques.

5. Procédé pour détecter des objets au moyen d'un capteur optoélectronique (1) au moyen de la lumière d'un émetteur de lumière (3), qui est amenée sous forme de faisceau lumineux sur un trajet d'émission (6) vers un rétro-réflecteur (7) ou sur un trajet de réception (8) en retour vers un récepteur de lumière (4), selon le principe d'auto-collimation ou bien selon le principe double-oeil, dans lequel l'émetteur de lumière (3) et le récepteur de lumière (4) comprennent pour focaliser la lumière sur un faisceau lumineux des optiques séparées selon le principe d'auto-collimation, ou bien une optique respective (9) étroitement voisine est associée selon le principe double-oeil, la lumière des émetteurs de lumière (3) est amenée de façon polarisée vers le trajet d'émission (6) et la lumière réfléchie est amenée de façon polarisée depuis le trajet de réception (8) vers le récepteur de lumière (4), et une interruption du faisceau lumineux est reconnue en tant que détection d'un objet (2),
**caractérisé en ce que**
le premier filtre polarisant (10) ou le second filtre polarisant (11) est monté au moins mobile en rotation autour d'un axe longitudinal optique sur un porte-filtre (13) dans un porte-optique (15), et l'autre second filtre polarisant (11) ou le premier filtre polarisant (10) est fixé de façon stationnaire, et le premier filtre polarisant (10) ou le second filtre polarisant est fixé sous un angle de 90° par rapport à l'autre second filtre polarisant (11) ou par rapport au premier filtre polarisant (10), l'une des optiques (9) étant agencée sur le porte-filtre (13) et le porte-filtre (13) étant mobile en translation le long de l'axe longitudinal (14) optique dans le porte-optique (15).

6. Procédé pour détecter des objets selon la revendication 5,
**caractérisé en ce que** un diaphragme (16) est agencé sur le porte-filtre (13).

7. Procédé pour détecter des objets selon l'une des revendications précédentes 5 à 6,
**caractérisé en ce que** le porte-filtre (13) est réalisé en forme tubulaire.
